Europäisches Patentamt

European Patent Office

Office européen des brevets

(11) Publication number: **0 130 826**
**A1**

(12) **EUROPEAN PATENT APPLICATION**

(21) Application number: **84304494.2**

(22) Date of filing: **29.06.84**

(51) Int. Cl.⁴: **F 16 F 9/10,** B 61 F 5/30

(30) Priority: **05.07.83 ZA 834896**

(43) Date of publication of application: **09.01.85**
**Bulletin 85/2**

(84) Designated Contracting States: **AT BE CH DE FR GB IT LI NL SE**

(71) Applicant: **SOUTH AFRICAN INVENTIONS DEVELOPMENT CORPORATION, Administration Building Council for Scientific and Industrial Research Scientia, Pretoria, Transvaal (ZA)**

(72) Inventor: **Scheffel, Herbert, 83A Van Wouw Street, Groenkloof Pretoria (ZA)**
Inventor: **Tournay, Harry Marshall, 123 Limpopo Avenue, Lyttleton Manor Verwoerdburg (ZA)**
Inventor: **Erwee, Andries Paul, 785 Berg Avenue, Florwina Pretoria (ZA)**

(74) Representative: **Jennings, Roy Alfred et al, GILL JENNINGS & EVERY 53-64 Chancery Lane, London WC2A 1HN (GB)**

(54) **Hydraulic dampers.**

(57) A hydraulic damper has two chambers (19) and (22) circumferentially defined by means of corrugated stainless steel tubes (18). There is a party wall (17) between the chambers and a passage through the wall with a bore projection (22) on it. The whole is covered by two sliding sleeves (12) and (13) connected to fixing lugs (10) and (11).

EP 0 130 826 A1

ACTORUM AG

SOUTH AFRICAN INVENTIONS
DEVELOPMENT CORPORATION.

GJE 41/2140/02

- 1 -

Hydraulic Dampers

## BACKGROUND TO THE INVENTION

This invention relates to hydraulic dampers.

Hydraulic damping systems are already in use. Such a system could comprise a pair of chambers containing a hydraulic fluid and which is joined through a passage so that action on one chamber causes that chamber to contract and expell fluid into the other chamber which expands to accept the fluid. The chambers are formed by piston and cylinder arrangements. Fluid flows through a restrictive orifice which may include a spring controlled valve and cut-off valves may protect the chambers against excess pressure.

If it were not for problems of sealing, such hydraulic systems would be ideal for various types of damping arrangements, including railway applications.

It is an object of the invention to provide a damping system in which sealing problems are obviated.

## SUMMARY OF THE INVENTION

According to the invention a damper system in which a pair of chambers containing hydraulic fluid is joined through a passage so that action on the first chamber causes that chamber to change size and expell or draw in fluid to or from the second chamber, has the improvement that the first chamber is formed from a longitudinally elastically deformable metallic tube with closures at each end of the tube which closures thus move together and apart to cause the first chamber to change size.

The second chamber is preferably also formed from a longitudinally elastically deformable tube.

In one form of the invention one closure is a party wall between the chambers, the passage is through the wall, a stirrup rigidly links the other two closures, a fixing lug is on the stirrup, and a second fixing lug is connected to the party wall and has lost motion with the stirrup.

In another form of the invention a fixing lug is secured to each of four closures and the passage is an interconnecting pipe.

In the preferred forms of the invention a damping orifice is provided in the passage.

The longitudinally elastically deformable tube may be of the corrugated kind currently used for incorporation into pipe systems to protect them during extreme changes of temperature. One such tube is sold under the trademark "Flexitube".

## DESCRIPTION OF THE DRAWINGS

Figure 1 is a section through a spring damper according to the invention, and

Figure 2 is a view of another damper system suitable to be used to dampen a railway vehicle axle box.

## DESCRIPTION OF EMBODIMENTS

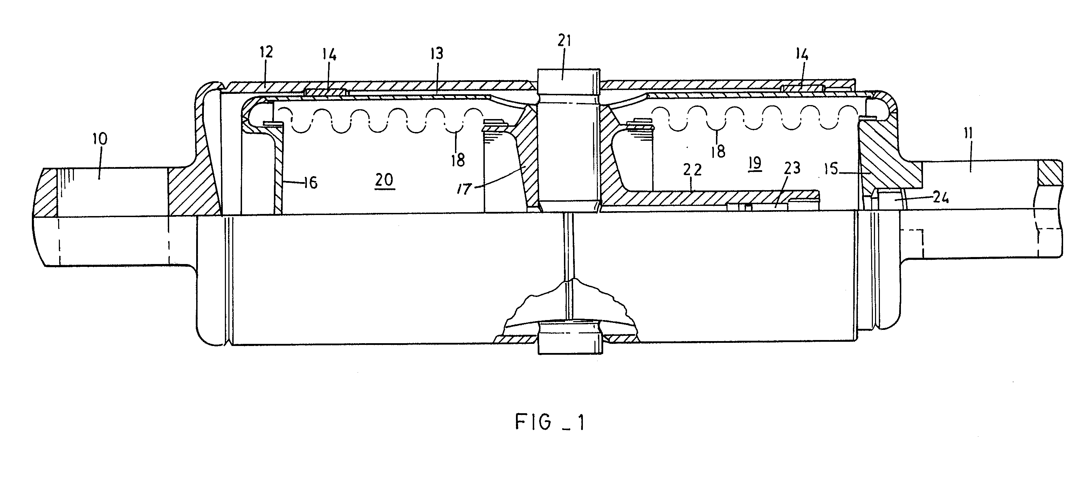

Figure 1 illustrates a damper with two attachment lugs 10 and 11. The lug 10 is attached to a sleeve 12 while the lug 11 is attached to a sleeve 13 which can slide inside the sleeve 11 on nylon bearing rings 14. The lug 11 attaches to the sleeve 13 through a closure 15 and terminates on a closure 16.

A centre piece 17 is joined to the closures 15 and 16 by means of lengths of tube 18 made of Flexitube to define two chambers 19 and 20 to either side of the centre piece 17. The latter is also rigidly connected to the sleeve 12 by means of a pin 21 welded to it and passing through slots in the sleeve 13.

The centre piece 17 also has an axially bored projection 22 into which is screwed a set screw 23 with a suitable damping orifice. Access to the set screw 23 and to the whole device for charging it with hydraulic fluid is by means of a set screw 24 in the closure 15.

The set screw 23 may have a spring controlled valve and cut-off valves from the bore of the projection 22 may be provided to protect the chambers 20 and 21 in the same manner as was done in the prior art.

In use the lug 10 is connected to, say, a railway truck frame and the lug 11 to, say, an axlebox housing to provide damping between the frame and the housing. Damping is completely due to the viscocity of the fluid displaced between the chambers 20 and 21 and the axial deformation of the tubes 18 creates a spring return to the original position after damping.

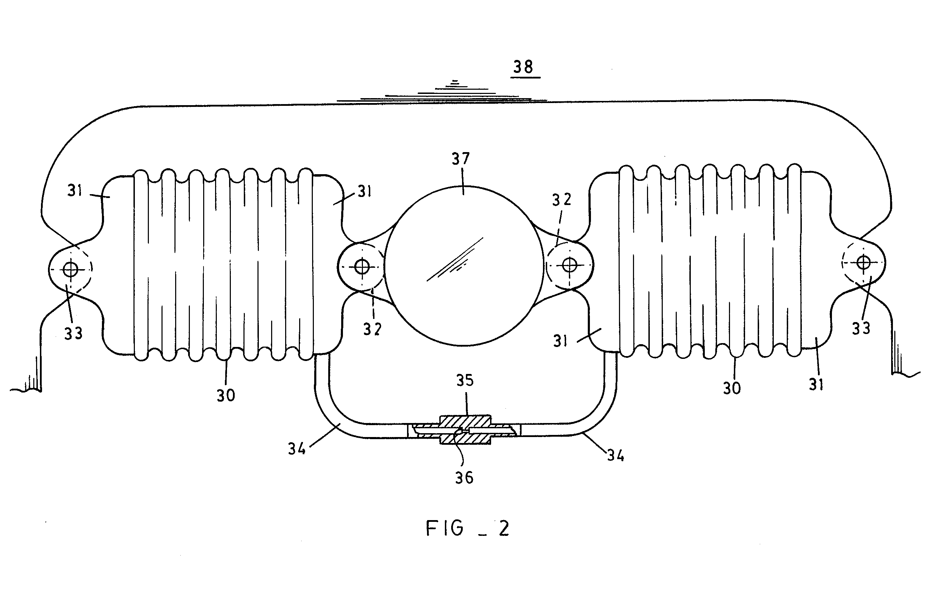

In the embodiment of Figure 2 the two lengths 30 of Flexitube are capped by caps 31 formed with lugs 32 and 33. Pipes 34 connect the tubes 30 through a connector 35 formed with an orifice 36.

Figure 2 shows one applicaton of this kind of embodiment. The lugs 32 are connected to brackets on an axlebox 37 of a railway bogie while the lugs 33 are connected to brackets on a sideframe 38. Once more there is spring damping between the axlebox 37 and the side frame 38.

0130826

- 4 -

<u>CLAIMS:</u>

1.
A damper system in which a pair of chambers containing hydraulic fluid is joined through a passage so that action on the first chamber causes that chamber to change size and expell or draw in fluid to or from the second chamber, with the improvement that the first chamber is formed from a longitudinally elastically deformable metallic tube with closures at each end of the tube which closures thus move together and apart to cause the first chamber to change size.

2.
The damper system claimed in claim 1 in which the second chamber is also formed from a longitudinally elastically deformable tube.

3.
The damper system claimed in claim 2 in which one closure is a party wall between the chambers, the passage is through the wall, a stirrup rigidly links the other two closures, a fixing lug is provided on the stirrup, and a second fixing lug is connected to the party wall and has lost motion with the stirrup.

4.
The damper system claimed in claim 2 in which a fixing lug is secured to each of four closures and the passage is an interconnecting pipe.

5.
The damper system claimed in any one of the above claims in which a damping orifice is provided in the passage.

6.
The damper system claimed in any one of the above claims in which each tube is formed with a corrugated wall.

FIG _ 1

0130826

FIG _ 2

European Patent
Office

**EUROPEAN SEARCH REPORT**

0130826

Application number

EP 84 30 4494

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-B-2 935 935 (BOGE)<br><br>* Whole document *<br><br>--- | 1-3,5,6 | F 16 F 9/10<br>B 61 F 5/30 |
| X | GB-A-1 175 255 (NUCLEAR POWER GROUP)<br>* Whole document *<br><br>--- | 1-3,5,6 | |
| X | DE-A-1 955 344 (HEIDENHAIN)<br><br>* Whole document *<br><br>--- | 1,2,4-6 | |
| X | DE-B-1 072 018 (ATELIERS G.S.P.)<br>* Column 2, line 37 - column 3, line 48; figures 1,2 *<br><br>--- | 1,2,5,6 | |
| X | FR-A-2 333 168 (WESER)<br><br>* Whole document *<br><br>--- | 1,2,4-6 | TECHNICAL FIELDS SEARCHED (Int. Cl. ³)<br><br>F 16 F<br>B 61 F |
| X | GB-A- 797 530 (THOMSON-HOUSTON)<br>* Page 1, line 60 - page 2, line 11; figures *<br><br>--- | 1,2,4-6 | |
| X | FR-A- 642 711 (AMYOT)<br><br>* Whole document *<br><br>--- -/- | 1-3,5,6 | |

The present search report has been drawn up for all claims

| Place of search | Date of completion of the search | Examiner |
|---|---|---|
| THE HAGUE | 02-10-1984 | ESPEEL R.P. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. ³) |
|---|---|---|---|
| A | EP-A-0 015 378 (MESSERSCHMITT-BÖLKOW-BLOHM) --- | | |
| A | GB-A-2 027 160 (SECOH GIKEN) --- | | |
| A | US-A-3 002 741 (AKUTOWICZ) --- | | |
| A | US-A-2 930 455 (WILLIAMS) --- | | |
| A | US-A-2 032 659 (HUSSMAN) ----- | | |

**TECHNICAL FIELDS SEARCHED (Int. Cl. ³)**

The present search report has been drawn up for all claims

| Place of search | Date of completion of the search | Examiner |
|---|---|---|
| THE HAGUE | 02-10-1984 | ESPEEL R.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82